# EUROPÄISCHE PATENTSCHRIFT

(11) **EP 2 844 399 B1**
(45) Veröffentlichungstag und Bekanntmachung des Hinweises auf die Patenterteilung: **08.06.2016**
(21) Anmeldenummer: 13724728.4
(22) Anmeldetag: 29.04.2013
(51) Int. Cl.: B05C 5/02, B05B 15/02, B31B 19/00, B05C 11/10, B29C 31/02

(54) **VORRICHTUNG ZUM AUFTRAGEN VON KLEBEMITTEL**
DEVICE FOR APPLYING ADHESIVE
DISPOSITIF POUR L'APPLICATION D'ADHÉSIF

(30) Priorität: 30.04.2012 DE 102012207206
(43) Veröffentlichungstag der Anmeldung: 11.03.2015
(73) Patentinhaber: Winkler + Dünnebier GmbH, 56564 Neuwied (DE)
(72) Erfinder: DAUM, Thomas, 56412 Nentershausen (DE); BÄTH, Daniel, 51069 Köln (DE)
(74) Vertreter: Walkenhorst, Andreas
(86) Internationale Anmeldenummer: PCT/EP2013/001273
(87) Internationale Veröffentlichungsnummer: WO 2013/164081

(56) Entgegenhaltungen:
- EP-A1- 0 816 232
- DE-A1- 2 101 800
- DE-A1-102009 035 152

## Beschreibung

Die Erfindung bezieht sich auf eine Klebstoffauftragvorrichtung zum Aufbringen eines Klebemittels auf ein Material, welches entlang einer Transportrichtung x bewegt wird, umfassend eine Düseneinheit mit einer Anzahl von Düsen zum Auftragen des Klebemittels auf das Material und ein Verfahren zum Aufbringen von Klebstoff auf ein Material, welches entlang einer Transportrichtung x bewegt wird.

Derartige Klebstoffauftragungsvorrichtungen kommen beispielsweise bei der Herstellung von Briefumschlägen mit Sichtfenstern zum Einsatz. Dabei wird in der Regel zunächst eine Papierbahn durch ein Walzensystem mit einer Anzahl von Messerwalzen oder ähnlichen Schneidwerkzeugen geführt, um einen Umschlagrohling herzustellen. Dabei wird in einem eigenen Schneidprozess der Umschlagrohling mit einer Ausnehmung für ein Sichtfenster versehen. Um diese Ausnehmung herum wird dann in einem nachgeschalteten Verfahrensschnitt ein Haftmittel aufgetragen und ein Fenstermaterial aufgeklebt. Zur Auftragung des Haftmittels wird dabei in der Regel auch auf ein Walzensystem zurückgegriffen. Eine Gummierwalze mit Haftstempel bzw. einem Formatteil zum Auftragen des Haftmittels auf den Umschlagrohling oder auf eine Fensterfolie, der an die Höhe und Breite des Sichtfensters angepasst ist, wird auf dem Umschlagrohling oder der Fensterfolie abgerollt, so dass die Ränder der Ausnehmung mit ausreichend Haftmittel versehen sind. Nachteilig an diesem Verfahren ist, dass eine Variation der Größe des Sichtfensters aber auch eine Variation der Positionierung des Sichtfensters stets ein Austausch der Gummierwalze zur Folge hat. Somit muss nicht nur für jedes gewünschte Format eine eigene Gummierwalze bereitgestellt und vorgehalten werden, diese müssen sogar bei jedem Formatwechsel aufwändig und unter Stillstand der Produktion gewechselt werden.

Bei der großflächigen Verklebung von Papier- oder Kartonzuschnitten werden neben den oben genannten Gummierwalzen auch Leisten mit einer Anzahl von Dosierdüsen verwendet, durch die ein Haftmittel bzw. ein Klebstoff auf den Zuschnitt aufgetragen wird. Ein derartiges Düsensystem ist beispielsweise aus der Druckschrift DE 10 2007 002 980 A1 bekannt. Die Dosierleiste erstreckt sich dabei über die gesamte Breite der Papierbahn und umfasst eine Anzahl von einzelnen Düsen, die in festen Abständen voneinander angeordnet sind und einzeln ansteuerbar sind. Derartige festinstallierte Systeme eignen sich allerding nur bedingt für den Einsatz bei der Verklebung von Fensterelementen und sind darüber hinaus sehr aufwändig zu reinigen. Durch den nur geringen Zwischenraum zwischen den Düsen und den Papierzuschnitten bzw. der Walze, die diese Papierzuschnitte transportieren, wird die Reinigung der Düsen erschwert, was wiederum zu längeren Stillstandzeiten der Anlage führt.

Eine Klebstoffauftragvorrichtung der oben genannten Art, bei der die Düseneinheit entlang einer ersten Führungsachse quer zur Transportrichtung x verschiebbar angeordnet ist, ist aus der EP 08 16 232 A1 oder aus der DE 10 2009 035 152 A1 bekannt.

Der Erfindung liegt die Aufgabe zugrunde, eine Klebstoffauftragvorrichtung der oben genannten Art anzugeben, die auch für verschiedene Klebeformate eine besonders hohe Flexibilität aufweist. Des Weiteren soll ein hierfür besonders geeignetes Verfahren angegeben werden.

Bezüglich der Vorrichtung wird diese Aufgabe erfindungsgemäß gelöst, durch eine weitere Düseneinheit, die eine Anzahl von gegeneinander verschiebbaren Einzelleimköpfen umfasst. Diese weitere Düseneinheit bzw. diese Einzelleimköpfe sind dabei ebenfalls entlang jeweils einer Führungsachse quer zur Transportrichtung des Materials verschiebbar angeordnet.

Bezüglich des Verfahrens wird die genannte Aufgabe erfindungsgemäß gelöst, indem zusätzlich zu der Düseneinheit eine Anzahl von Einzelleimköpfen quer zur Transportrichtung an die gewünschte Klebeposition über jeweils eigene Führungsachsen bewegt werden und das Aufbringen eines zweiten Klebstoffes über diese Einzelleimköpfe erfolgt.

Vorteilhafte Ausgestaltungen sind Gegenstand der Unteransprüche.

Die Erfindung geht von der Überlegung aus, dass eine besonders flexible Anpassung an unterschiedliche Abmessungen des mit Klebstoff zu versehenden Bereiches dann möglich ist, wenn auf eine feste Haftschablone bzw. eine Formatvorlage verzichtet werden kann. Aus diesem Grund wurde auf die Verwendung einer Düseneinheit mit einer Anzahl von Düsen zurückgegriffen. Wie sich nun gezeigt hat, wird die Bereitstellung von verschiedensten Formaten an Klebeflächen insbesondere dann ermöglicht, wenn diese Düseneinheit bewegbar angeordnet ist und die Verklebung stets in der optimalen Klebeposition geschieht. Aus diesem Grund ist die Düseneinheit entlang einer ersten Führungsachse verschiebbar angeordnet, die quer zur Transportrichtung des Materials durch die Düseneinheit erreicht werden. Die Düseneinheit bezeichnet dabei ein System aus mehreren Leimköpfen, die entlang einer gemeinsamen Führungsachse verschoben werden können. Diese können miteinander in festen Abständen verbunden sein, beispielsweise als Düsenblock, oder auch einzeln bewegbar ausgeführt sein. Um die Flexibilität der Klebstoffauftragvorrichtung für verschiedene Klebeformate weiter zu erhöhen und auch die Möglichkeit bereit zu stellen auf unterschiedliche Haftmittel zurückgreifen zu können, ist zudem die weitere Düseneinheit mit den Einzelleimköpfen vorgesehen.

Für eine möglichst platzsparende Anordnung der einzelnen Leimköpfe und der Düsen auf der Düseneinheit und zugleich zur Bereitstellung von möglichst großen Klebeflächen sind diese in vorteilhafter Ausgestaltung in einer Reihe und quer zur Transportrichtung angeordnet. Durch diese Anordnung kann bei einer festen Zahl an Düsen eine möglichst große Breite der Klebefläche erreicht werden.

Für eine besonders schnelle und hohe Festigkeit, sind dabei die Einzelleimköpfe zum Auftragen von Heißleim ausgelegt, während die Düsen in der Düseneinheit zum Auftragen von Kaltleim ausgelegt sind. Dies hat zur Folge, dass durch den punktuellen Auftrag von Heißleim an ausgewählten Punkten des Klebeformats, beispielsweise in den Ecken einer rechteckigen Ausnehmung des Materials, eine schnelle Haftwirkung einsetzen kann und somit, beispielsweise bei der Verklebung.
von Sichtfenstern, das in einem nachfolgenden Produktionsprozess aufgelegte zweite Material möglichst schnell eine Grundhaftung aufbaut, die ein anfängliches Verrutschen oder Ablösen verhindert. Der durch die Düseneinheit großflächiger aufgetragene Kaltleim härtet wesentlich langsamer aus und sorgt somit für die dauerhafte und langanhaltende Haftwirkung.

Für eine besonders effiziente und auch flexible Verteilung des Klebstoffes kann die Auftragung des Klebstoffes durch die einzelnen Düsen der Düseneinheit und auch durch die Düsen der Einzelleimköpfe in bevorzugter Ausgestaltung der Klebstoffauftragungsvorrichtung einzeln und getrennt voneinander angesteuert werden. Dies führt dazu, dass auch rechteckige Klebeflächen, wie sie beispielsweise bei der Verklebung von Sichtfenstern benötigt werden, auf einfachste und klebstoffsparende Weise möglich sind. Bei einer rechteckigen Klebefläche würden beispielsweise in einem ersten Schritt entsprechend der Breite des Rechteckes eine bestimmte Anzahl von nebeneinanderliegenden Düsen ein Klebemittel aufgetragen, bevor in einer Anzahl von weiteren Schritten nur die beiden äußersten Düsen der oben bestimmten Anzahl von Düsen Klebemittel abgeben, bis die Länge des Rechteckes erreicht wird, ehe in einem Abschließenden Schritt wieder alle oben bestimmten Düsen Klebemittel auf die Materialbahn auftragen. Parallel zu diesem Verfahren können die Düsen der Einzelleimköpfe in ausgewählten Punkten des Rechteckes zusätzliches Klebemittel auftragen.

Durch Verklebung von Restleim an den Düsen und somit eine Verstopfung dieser wird eine regelmäßige Reinigung selbiger notwendig. Für eine besonders einfache Reinigung der Düsen an der Düseneinheit oder auch an den Einzelleimköpfen sind daher in vorteilhafter Ausgestaltung Reinigungsstationen vorgesehen, die jeweils entlang der betreffenden Führungsachse angeordnet sind. Die Düseneinheit oder die Einzelleimköpfe können somit entlang der Führungsachse in die Reinigungsstationen verschoben werden, die sich für möglichst kurze Wege bevorzugt direkt neben der Transportwalze für das Material oder der Transportbahn befinden. Bei Unterbrechung der Produktion oder auch während einzelner Produktionsabschnitte, in denen keine Verklebung gewünscht wird, können die Düsen somit besonders leicht aus der Klebeposition in eine Reinigungsposition in der Reinigungsstation geschoben werden.

Für eine Automatisierung des Reinigungsvorganges oder auch zur Erzeugung von Reinigungshinweisen umfasst die Klebstoffauftragungsvorrichtung in besonders bevorzugter Ausgestaltung eine Signaleinheit, die eine Messeinheit und eine Auswerteeinheit umfasst. Die Messeinheit misst dabei einen Reinigungsparameter, beispielsweise mittels eines Sensors im Bereich der Düsen, die Zeit seit der letzten Reinigung der Düsen oder die Anzahl der Klebevorgänge durch die Düsen und übergibt diesen laufend an eine Auswerteeinheit. Diese Auswerteeinheit vergleicht den Messwert mit einem entsprechenden und in der Auswerteeinheit hinterlegten Grenzwert. Eine Überschreitung des Grenzwertes wird dabei an die Signaleinheit gemeldet, die daraufhin je nach Ergebnis der Auswerteeinheit ein Signal zur selbsttätigen Reinigung der Düsen bei der nächsten Unterbrechung des Klebeprozesses ausgibt oder auch nur ein optisches oder akustisches Warnsignal zur manuellen Initiierung des Reinigungsprozesses erzeugt. Dabei können in der Auswerteeinheit eine Vielzahl von Regeln und Grenzwerten zur automatischen Reinigung der Düsen hinterlegt werden.

Die mit der Erfindung erzielten Vorteile liegen insbesondere darin, dass durch die flexible Positionierung der Düseneinheit quer zur Transportrichtung des Materials und die individuelle Ansteuerung der Düsen eine platzsparende Klebstoffauftragungsvorrichtung angegeben werden kann, die nahezu jegliche Form einer Klebefläche ohne Austausch von Formatteilen abbilden kann. Durch die Kombination der Düseneinheit mit mehreren Einzelleimköpfen und den Betrieb mit unterschiedlichen Leimtypen kann somit sowohl eine schnelle, erste als auch eine feste, langanhaltende Klebwirkung erreicht werden. Darüber hinaus ist eine besonders einfache und teilweise sogar im Betrieb der Anlage denkbare Reinigung der Düsen möglich.

Ein Ausführungsbeispiel der Erfindung wird anhand einer Zeichnung näher erläutert. Darin zeigen:
- Fig. 1: ein Ausschnitt aus einer Klebstoffauftragvorrichtung,
- Fig. 2: ein Ausschnitt aus einer Klebstoffauftragvorrichtung mit einer Reinigungsstation und Antriebseinheiten.

Gleiche Teile sind in allen Figuren mit den selben Bezugszeichen versehen.

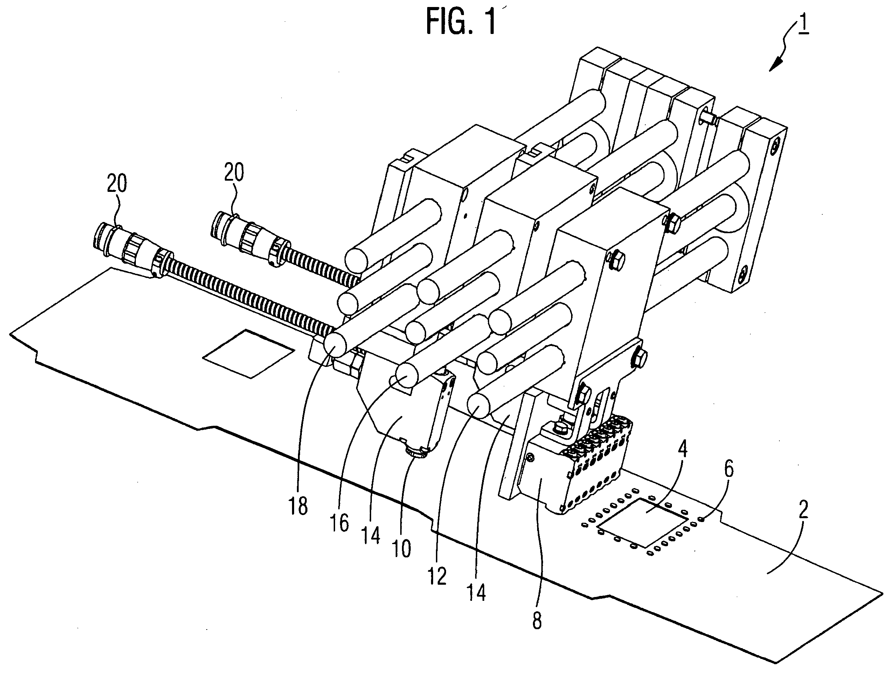

Ein Ausführungsbeispiel einer Klebstoffauftragvorrichtung 1 ist ausschnittsweise in Fig. 1 dargestellt. Ein Material 2, dargestellt ist beispielhaft eine bereits in einem vorhergehenden Arbeitsschritt seitlich geschnittene Materialbahn 2, wird dabei entlang einer Transportrichtung x geführt. Dargestellt ist dabei ein ebener Transport des Materials 2, wie er beispielsweise durch ein Transportband realisiert werden könnte. Denkbar ist allerdings auch der Transport des Materials 2 über eine Transportwalze. Es ist bei dem Transport des Materials 2 dabei auch möglich, die Auftragung des Klebemittels horizontal vorzunehmen, das heißt, dass das Material 2 vertikal nach unten oder oben geführt wird während die Klebstoffauftragvorrichtung derart angeordnet ist, dass die Düseneinheit 8 und die Einzelleimköpfe 14 das Klebemittel horizontal aufsprühen.

Das Material 2 verfügt bereits über eine Anzahl an Ausnehmungen 4, die im Falle der Herstellung von Briefumschlägen das Fensterelement bilden. Eines dieser Fensterelemente 4 hat im vorliegenden Ausführungsbeispiel bereits die Düseneinheit 8 und die Einzelleimköpfe 14 zum Auftrag des Klebemittels passiert und ist mit einem Klebemuster 6 versehen, welches um die Ausnehmung 4 herum angeordnet ist. Das dargestellte Klebemuster 6 besteht dabei aus einer Anzahl von einzelnen Klebepunkten, die je nach Ansteuerung der Düseneinheit 8 und die Einzelleimköpfe 14 aus Heiß- oder Kaltleim bestehen. Alternativ sind aber auch Klebestreifen, insbesondere parallel zur Transportrichtung, denkbar. Insbesondere bei der Herstellung von Briefumschlägen mit Fensterelementen ist dabei sowohl der Auftrag der Klebemittels auf die Fensterfolie als auch auf den Umschlagrohling denkbar.

Die Auftragung der Klebepunkte aus Kaltleim geschieht dabei über einee direkt über der Materialbahn 2 angeordnetee Düseneinheit 8, die als Düsenblock 8 ausgebildet ist. Dieser Düsenblock 8 umfasst eine Anzahl von Düsen 10 , im vorliegenden Ausführungsbeispiel sind acht Düsenköpfe mit je einer Düse 10 auf dem Düsenblock 8 vorgesehen, mit denen der Kaltleim auf das Material 2 aufgetragen werden kann. Die Düsen 10 des Düsenblocks 8 im Ausführungsbeispiel sind dabei im festen und unveränderbaren Abstand voneinander angeordnet. Es ist aber ebenfalls denkbar, dass der Abstand der Düsen 10 in der Düseneinheit 8 einzeln varriert werden kann. Der Düsenblock 8 ist dabei quer zur Transportrichtung x des Materials angeordnet und kann über die gesamte Breite entlang dreier parallel zueinander angeordneter Führungsachsen 12 bewegt bzw. verschoben werden. Dabei dienen die beiden äußeren Führungsachsen 12 lediglich der Führung und Stabilisierung des Düsenblocks 8. Nur die mittlere Führungsachse verfügt über ein Gewinde zum Positionieren de Düsenblocks 8. Zusätzlich zu dem Düsenblock 8 zur Auftragung des Kaltleims sind zwei Einzelleimköpfe 14 vorgesehen, durch die ein Heißleim auf das Material 2 aufgetragen werden kann. Der Heißleim sorgt dabei bei der anschließenden Verklebung mit einem zweiten Material bzw. mit einem Fensterelement für eine schnelle Ersthaftung. Die Einzelleimköpfe 14 zum Auftragen des Heißleims sind dabei ebenfalls an jeweils eigenen Führungsachsen 16, 18 angeordnet und so individuell quer zur Transportrichtung x ausrichtbar. Die Düsen 10, sowohl die des Düsenblocks 8 als auch der Einzelleimköpfe 14 können dabei durch eine nicht dargestellte Steuereinheit einzeln im Bezug auf den Klebemittelauftrag angesteuert werden. Für die Steuerung der Einzelleimköpfe 14 ist daher für jeden Einzelleimkopf 14 eine Leitung 20 vorgesehen, über die sowohl die Stromversorgung erfolgt als auch die Steuersignale für den Auftrag des Klebemittels geleitet werden. Auch die Steuerung und Stromversorgung der Düseneinheit 8 geschieht über eine derartige, nicht dargestellte Leitung.

Der Rand der Fensterelemente auf der Materialbahn 2 wird beim Durchlauf durch die Klebestation somit zunächst mit einer Anzahl von einzelnen Heißleimpunkten oder -linien versehen, bevor ein Kaltleimklebemuster durch den Düsenblock 8 aufgetragen wird.

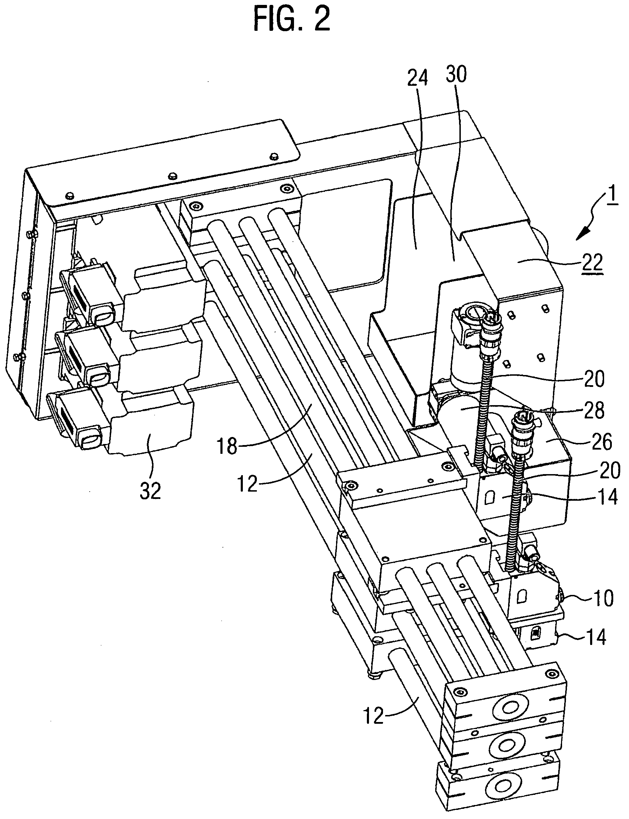

Einen größeren Ausschnitt eines Ausführungsbeispiels einer Klebstoffauftragvorrichtung 1 ist in Fig. 2 aus einem anderen Blickwinkel dargestellt. Dabei ist ebenfalls die Reinigungsstation 22 dargestellt, die derart neben der nicht dargestellten Materialbahn 2 angeordnet ist, dass bei einem Verschieben des Düsenblocks 8 und der Einzelleimköpfe 14 entlang der Führungsachsen 12, 16, 18 neben die Materialbahn 2, diese in die Reinigungsstation 22 geführt werden. Sowohl die Klebeposition der Düseneinheit 8 und der Einzelleimköpfe 14 als auch die Reinigungsposition der Düseneinheit 8 und der Einzelleimköpfe 14 liegt somit entlang der Führungsachsen 12, 16, 18, so dass besonders einfach und schnell zwischen beiden Positionen gewechselt werden kann. Die Reinigungsstation 22 umfasst dabei eine Spül- 24 und eine Reinigungskammer 26. In der Reinigungskammer 26 ist eine drehbar gelagerte Reinigungswalze 28, insbesondere eine Schaumstoffwalze, angeordnet, die im Falle der Reinigung der Düsen 10 in direktem Kontakt zu den Düsen 10 steht und durch eine Drehbewegung der Reinigungswalze 28 die Düsen 10 von Kleberückständen befreit. Dabei kann die Reinigungswalze 28 mit einer Reinigungsflüssigkeit, insbesondere einem Lösemittel, versehen sein, damit die Kleberückstände besonders einfach entfernt werden können. Die Breite der Reinigungswalze 28 ist dabei an die Breite des Düsenblocks 8 angepasst, um in einem Arbeitsschritt alle Düsen 10 des Düsenblocks 8 reinigen zu können. In alternativer Ausfühung kann die Reinigungswalze 28 auch kleiner ausgeführt sein. Dabei ist es dann zweckmäßig, wenn die Düsen 10 in der Reinigungsposition nicht verharren, sondern an der Reinigungswalze 28 vorbei geführt werden. Die Düsen 10 werden somit während des Vorbeifahrens an der sich drehenden Reinigungswalze 28 gereinigt.

Nach der Beseitigung der Kleberückstände in der Reinigungskammer 26 können die Düseneinheit 8 und die Einzelleimköpfe 14, wiederrum entlang der Führungsachsen 12, 16, 18, in eine Spülkammer 24 geschoben werden. In dieser Spülposition wird ein kurzer Testlauf durchgeführt, bei dem eine kurze Abgabe an Klebemittel durch die Düsen 10 in einen Auffangbehälter 30 geschieht. Durch diesen Sprühstoß mit Klebemittel wird die Düsen 10 von getrockneten Kleberesten in seinem Inneren befreit. Anschließend werden die Düseneinheit 8 und/oder die Einzelleimköpfe 14, wieder in die Reinigungsposition geschoben, wo durch die angefeuchtete Reinigungswalze 28 eine Endreinigung vorgenommen wird.

Diese Reinigungszyklen werden dabei von einer nicht dargestellten Signaleinheit überwacht und kontrolliert. Dabei wird kontinuierlich durch eine Messeinheit die Zeit gemessen, die seit der letzten Reinigung der Düseneinheit 8 und der Einzelleimköpfe 14 vergangen ist. Sobald diese gemessene Zeit einen ersten Grenzwert überschreitet, wird bei dem nächsten Maschinenstillstand automatisch eine Reinigung der Düseneinheit 8 und der Einzelleimköpfe 14 entsprechend des oben beschriebenen Reinigungsablaufs initiiert. Sofern kein Maschinenstillstand vorgesehen ist bzw. durchgeführt wird und die gemessene Zeit auch einen zweiten Grenzwert übersteigen, so wird eine Warnmeldung, beispielsweise in Form eines optischen oder akustischen Signals, ausgegeben, die auf eine dringend notwendige Reinigung der Düseneinheit 8 und die Einzelleimköpfe 14 hinweist. Nun kann die Maschine manuell gestoppt werden, sodass der Reinigungsprozess automatisch oder ebenfalls manuell durchgeführt werden kann. Es ist ebenfalls denkbar, dass die Anlage bei Überschreitung des zweiten (oder eines dritten) Grenzwertes automatisch stoppt und den Reinigungsprozess durchführt. Nach Abschluss des Reinigungsvorgangs wird die Zeitmessung neu gestartet.

Neben der Messung der Zeit seit der letzten Reinigung ist es ebenfalls möglich durch entsprechende Sensoren weitere Kenngrößen für den Zustand der Leimköpfe oder ihrer Düsen zu überwachen und entsprechend bei Über- oder Unterschreitung eines Grenzwertes die Reinigung zu initiieren.

Die Klebstoffauftragvorrichtung 1 nach dem Ausführungsbeispiel der Fig. 2 umfasst darüber hinaus über eine Anzahl von Antriebseinheiten 32 für die Bewegung der Düseneinheit 8 und der Einzelleimköpfe 14 entlang der jeweiligen Führungsachse 12, 16, 18. Im dargestellten Ausführungsbeispiel erfolgt die Bewegung automatisch über einen Elektromotor und ein nicht dargestelltes Zahnriemensystem. Es ist aber ebenfalls die manuelle Verschiebung der Düseneinheit 8 und der Einzelleimköpfe 14 durch Handkurbeln denkbar.

### Bezugszeichenliste

- 1: Klebstoffauftragvorrichtung
- 2: Material
- 4: Ausnehmung
- 6: Klebemuster
- 8: Düseneinheit
- 10: Düse
- 12: Führungsachse
- 14: Einzelleimköpfe
- 16: Führungsachse
- 18: Führungsachse
- 20: Leitung
- 22: Reinigungsstation
- 24: Spülkammer
- 26: Reiningungskammer
- 28: Reinigungswalze
- 30: Auffangbehälter
- 32: Antriebseinheit

- x: Transportrichtung

## Patentansprüche

1. Klebstoffauftragvorrichtung (1) zum Aufbringen eines Klebemittels auf ein Material (2), welches entlang einer Transportrichtung (x) bewegt wird, umfassend eine Düseneinheit (8) mit einer Anzahl von Düsen (10) zum Auftragen des Klebemittels auf das Material (2), die entlang einer ersten Führungsachse (12) quer zur Transportrichtung (x) verschiebbar angeordnet ist, **dadurch gekennzeichnet, dass** zusätzlich eine Anzahl von Einzelleimköpfen (14) vorgesehen sind, die getrennt voneinander auf jeweils eigenen Führungsachsen (16,18) quer zur Transportrichtung (x) verschiebbar angeordnet sind.

2. Klebstoffauftragvorrichtung (1) nach Anspruch 1, **dadurch gekennzeichnet, dass**
die Düsen (10) in der Düseneinheit (8) in Reihe und quer zur Transportrichtung (x) angeordnet sind.

3. Klebstoffauftragungsvorrichtung (1) nach Anspruch 1 oder 2, **dadurch gekennzeichnet, dass**
die Düseneinheit (8) zum Auftragen von Kaltleim und die Einzelleimköpfe (14) zum Auftragen von Heißleim ausgelegt sind.

4. Klebstoffauftragungsvorrichtung (1) nach einem der Ansprüche 1 bis 3,
**dadurch gekennzeichnet, dass**
die Düsen (10) der Düseneinheit (8) und die Einzelleimköpfe (14) für den Klebstoffauftrag getrennt voneinander durch eine gemeinsame Steuereinheit ansteuerbar sind.

5. Klebstoffauftragungsvorrichtung (1) nach einem der Ansprüche 1 bis 4,
**dadurch gekennzeichnet, dass**
eine Anzahl von Reinigungsstationen (22) vorgesehen sind, die entlang einer Führungsachse (12, 16, 18) oder entlang mehreren Führungsachsen (12, 16, 18) angeodnet sind.

6. Klebstoffauftragungsvorrichtung (1) nach einem der Ansprüche 1 bis 5
**dadurch gekennzeichnet, dass**
eine Signaleinheit vorgesehen ist, die eine Messeinheit zur Messung eines Messwertes und eine Auswerteeinheit zur Auswertung des Messwertes umfasst, die bei Überschreiten eines Grenzwertes durch den Messwert ein Signal zum Reinigen der Düseneinheit (8) und/oder der Einzelleimköpfe (14) in einer Reinigungsstation ausgibt.

7. Verfahren zum Aufbringen von Klebstoff auf ein Material (2), welches entlang einer Transportrichtung (x) bewegt wird, wobei eine Düseneinheit (8) mit einer Anzahl von Düsen (10) entlang einer ersten Führungsachse (12) quer zur Transportrichtung (x) an die gewünschten Klebepositionen bewegt wird, wobei das Aufbringen eines ersten Klebstoffes über diese Düsen (10) erfolgt, und wobei zusätzlich zu der Düseneinheit (8) eine Anzahl von Einzelleimköpfen (14) quer zur Transportrichtung (x) an die gewünschte Klebeposition über jeweils eigene Führungsachsen (16, 18) bewegt werden und das Aufbringen eines zweiten Klebstoffes über diese Einzelleimköpfe (14) erfolgt.

8. Verfahren zum Aufbringen von Klebstoff auf ein Material (2) nach Anspruch 7, **dadurch gekennzeichnet, dass**
ein Messert bestimmt wird und ein Signal zur Reinigung einzelner oder aller Düsen (10) erzeugt und ausgegeben wird, sobald der Messwert einen Grenzwert überschreitet.

## Claims

1. Adhesive-application device (1) for applying an adhesive to a material (2) that is moved in a transport direction (x), comprising a nozzle unit (8) having a number of nozzles (10) for applying the adhesive to the material (2) which are arranged along a first guide rod (12) so as to be movable transversely to the transport direction (x), **characterised in that** a number of individual glue heads (14) are also provided, which are arranged separately on their own guide rods (16, 18) in each case so as to be movable transversely to the transport direction (x).

2. Adhesive-application device (1) according to claim 1, **characterised in that** the nozzles (10) are arranged in the nozzle unit (8) both in series and transversely to the transport direction (x).

3. Adhesive-application device (1) according to either claim 1 or claim 2, **characterised in that** the nozzle unit (8) is designed to apply cold glue and the individual glue heads (14) are designed to apply hot glue.

4. Adhesive-application device (1) according to any of claims 1 to 3, **characterised in that** the nozzles (10) of the nozzle unit (8) and the individual glue heads (14) can be separately controlled by a common control unit in order to apply the adhesive.

5. Adhesive-application device (1) according to any of claims 1 to 4, **characterised in that** a number of cleaning stations (22) are provided, which are arranged either along one guide rod (12, 16, 18) or along a plurality of guide rods (12, 16, 18).

6. Adhesive-application device (1) according to any of claims 1 to 5, **characterised in that** a signal unit is provided, which comprises a measurement unit for measuring a measured value and an evaluation unit for evaluating the measured value, and which emits a signal for cleaning the nozzle unit (8) and/or the individual glue heads (14) in a cleaning station when the measured value exceeds a limit value.

7. Method for applying adhesive to a material (2) that is moved in a transport direction (x), wherein a nozzle unit (8) comprising a number of nozzles (10) is moved along a first guide rod (12), transversely to the transport direction (x), to the desired adhesion positions, wherein a first adhesive is applied by means of said nozzles (10) and wherein, in addition to the nozzle unit (8), a number of individual glue heads (14) are moved over their own guide rods (16, 18) in each case, transversely to the transport direction (x), to the desired adhesion position and a second adhesive is applied by means of said individual glue heads (14).

8. Method for applying an adhesive to a material (2) according to claim 7, **characterised in that** a measured value is determined and a signal for cleaning either individual nozzles or all of the nozzles (10) is generated and emitted as soon as the measured value exceeds a limit value.

## Revendications

1. Dispositif d'application d'adhésif (1) destiné à mettre en place un agent adhésif sur un matériau (2) qui est déplacé le long d'une direction de transport (x), comprenant une unité de buses (8), avec un certain nombre de buses (10) pour l'application de l'agent adhésif sur le matériau (2), qui est disposée de façon déplaçable le long d'un premier axe de guidage (12) transversalement à la direction de transport (x), **caractérisé en ce qu'**il est prévu en plus un certain nombre de têtes de colle individuelles (14) qui sont disposées séparément les unes des autres sur respectivement leurs propres axes de guidage (16, 18) transversalement à la direction de transport (x).

2. Dispositif d'application d'adhésif (1) selon la revendication 1, **caractérisé en ce que** les buses (10) sont disposées en lignes et transversalement à la direction de transport (x) dans l'unité de buses (8).

3. Dispositif d'application d'adhésif (1) selon la revendication 1 ou 2, **caractérisé en ce que** l'unité de buses (8) est conçue pour l'application de colle froide et les têtes de colle individuelles (14) sont conçues pour l'application de colle chaude.

4. Dispositif d'application d'adhésif (1) selon l'une des revendications 1 à 3, **caractérisé en ce que** les buses (10) de l'unité de buses (8) et les têtes de colle individuelles (14) pour l'application d'adhésif peuvent être pilotées séparément les unes des autres par une unité de commande commune.

5. Dispositif d'application d'adhésif (1) selon l'une des revendications 1 à 4, **caractérisé en ce qu'**il est prévu un certain nombre de postes de nettoyage (22) qui sont disposés le long d'un axe de guidage (12, 16, 18) ou le long de plusieurs axes de guidage (12, 16, 18).

6. Dispositif d'application d'adhésif (1) selon l'une des revendications 1 à 5, **caractérisé en ce qu'**il est prévu une unité de signalisation, qui comprend une unité de mesure pour la mesure d'une valeur de mesure et une unité d'analyse pour l'analyse de la valeur de mesure, qui, en cas de dépassement d'une valeur limite par la valeur de mesure, délivre un signal pour le nettoyage de l'unité de buses (8) et/ou des têtes de colle individuelles (14) dans un poste de nettoyage.

7. Procédé d'application d'adhésif sur un matériau (2) qui est déplacé le long d'une direction de transport (x), dans lequel une unité de buses (8) avec un certain nombre de buses (10) est déplacée le long d'un premier axe de guidage (12) transversalement à la direction de transport (x) vers les positions d'encollage souhaitées, dans lequel l'application d'un premier adhésif s'effectue par le biais de ces buses (10), et dans lequel, en plus de l'unité de buses (8), un certain nombre de têtes de colle individuelles (14) sont déplacées transversalement à la direction de transport (x) vers la position d'encollage souhaitée par le biais de respectivement leurs propres axes de guidage (16, 18) et l'application d'un deuxième adhésif est effectuée par le biais de ces têtes de colle individuelles (14).

8. Procédé d'application d'adhésif sur un matériau (2) selon la revendication 7, **caractérisé en ce qu'**une valeur de mesure est définie et un signal pour le nettoyage de buses (10) individuelles ou de toutes les buses est produit et délivré dès que la valeur de mesure dépasse une valeur limite.
